# EUROPEAN PATENT APPLICATION

(11) **EP 1 926 277 A1**
(43) Date of publication of application: **28.05.2008**
(21) Application number: 06024406.8
(22) Date of filing: 24.11.2006
(51) Int. Cl.: H04L 29/06, H04L 29/12

(54) **Method for mitigating denial of service attacks against a home agent**

(71) Applicant: Matsushita Electric Industrial Co., Ltd., Kadoma-shi Osaka 571-8501 (JP)
(72) Inventor: Weniger, Kilian, Dr., 63225 Langen (DE); Bachmann, Jens, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for mitigating the effects of a DoS attack against a home agent supporting mobility for a plurality of mobile nodes. Furthermore the invention also relates to a home agent, a mobile node and a communication system implementing the method for mitigating the effects of a DoS attack against a home agent supporting mobility for a plurality of mobile nodes. To consider the problem of DoS attacks in the design of a mechanism for improving communication systems enabling mobility of mobile nodes, the invention proposes to configure a plurality of addresses at which the home agent is reachable in a communications network and to assign to each of the mobile nodes at least one of the plurality of home agent addresses. If a denial of service attack is detected by the home agent, the home agent de-configures the home agent address to which data packets of the denial of service attack are destined.

## Description

### FIELD OF THE INVENTION

The invention relates to a method for mitigating the effects of a denial of service attack against a home agent supporting mobility for a plurality of mobile nodes. Furthermore the invention also relates to a home agent, a mobile node and a communication system implementing the method for mitigating the effects of a denial of service attack against a home agent supporting mobility for a plurality of mobile nodes.

### TECHNICAL BACKGROUND

Communications systems evolve more and more towards an Internet Protocol (IP)-based network. They typically consist of many interconnected networks, in which speech and data is transmitted from one terminal to another terminal in pieces, so-called packets. IP packets are routed to the destination by routers in a connection-less manner. Therefore, packets comprise IP header and payload information, whereby the header comprises among other things source and destination IP address.

For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, a so-called mobile node (MN), and moves between subnets, it must change its IP address to a topological correct address due to the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 - also denoted MIPv6 - (see D. Johnson, C. Perkins, J. Arkko, "Mobility Support in IPv6", IETF RFC 3775, June 2004, available at http://www.ietf.org and incorporated herein by reference) is an IP-based mobility protocol that enables mobile nodes to move between subnets in a manner transparent for higher layers and applications, i.e. without breaking higher-layer connections. Therefore, a mobile node has two IP addresses configured: a Care-of-Address (CoA) and a Home Address (HoA). The mobile node's higher layers use the home address for communication with the communication partner (destination terminal), from now on called Corresponding Node (CN). This address does not change and serves the purpose of identification of the mobile node. Topologically, it belongs to the Home Network (HN) of the mobile node. In contrast, the care-of address changes on every movement resulting in a subnet change and is used as the locator for the routing infrastructure. Topologically, it belongs to the network the mobile node is currently visiting. One out of a set of Home Agents (HA) located on the home link maintains a mapping of the mobile node's care-of address to mobile node's home address and redirects incoming traffic for the mobile node to its current location. Reasons for deploying a set of home agents instead of a single home agent are redundancy and load balancing.

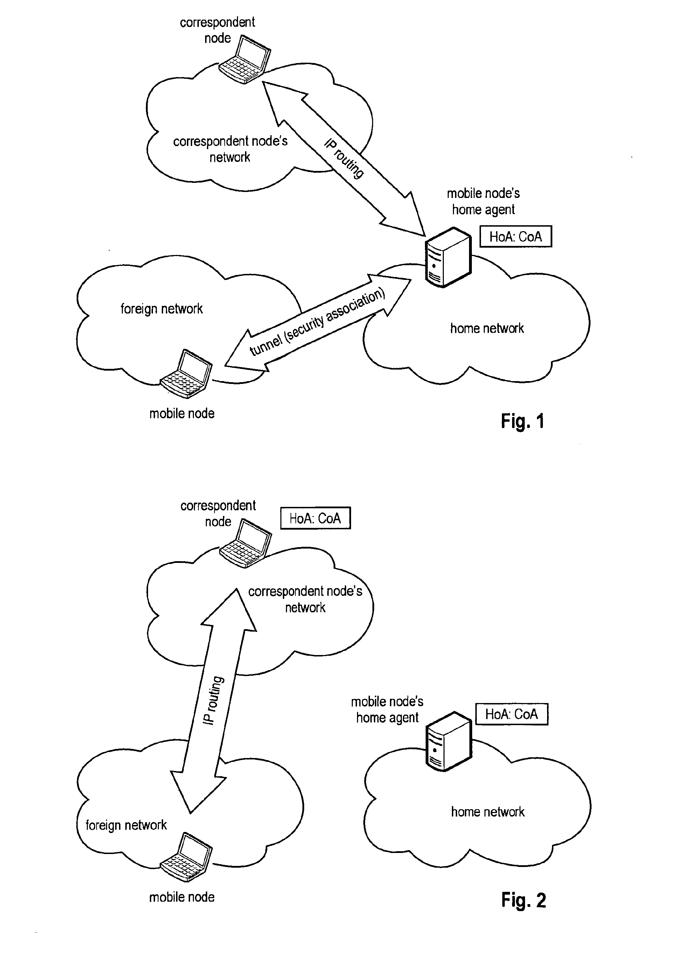

Mobile IPv6 currently defines two modes of operation: bi-directional tunneling (Fig. 1) and route optimization (Fig. 2). Using bi-directional tunneling, data packets sent by the correspondent node and addressed to the home address of the mobile node are intercepted by the home agent in the home network and tunneled to care-of address of the mobile node. Data packets sent by the mobile node are reverse tunneled to the home agent, which decapsulates the packets and sends them to the correspondent node (reverse tunneling means that packets are transmitted by the mobile node via a tunnel that starts at the mobile node and terminates at the home agent).

For this operation, only the home agent is informed about the care-of address of the mobile node. Therefore, the mobile node sends Binding Update (BU) messages to the home agent. These messages are sent over an IPsec security association and thus are authenticated and integrity protected. A drawback is that if the mobile node is far away from the home network and the correspondent node is close to the mobile node, the communication path is unnecessarily long, resulting in inefficient routing and high packet delays.

The route optimization mode can prevent the inefficiency of bi-directional tunneling mode by utilizing the direct path between correspondent node and mobile node. When using route optimization, the mobile node sends binding update messages to the correspondent node, which then is able to directly send data packets to the mobile node (a type 2 routing header is used to send the packets destined to the mobile node's home address on the direct path to the mobile node's care-of address). Of course, the correspondent node has to implement Mobile IPv6 route optimization support.

Recently, Mobile IPv6 has been extended to enable mobile nodes to dynamically bootstrap with home agents as for example described in the IETF Internet Drafts by Giaretta et al., "Mobile IPv6 bootstrapping in split scenario", March 2006 or Chowdhury et al., "MIP6-bootstrapping via DHCPv6 for the Integrated Scenario, June 2006, and Devarapalli et al. "Mobile IPv6 Bootstrapping for the Authentication Option Protocol", June 2006 (all drafts incorporated herein by reference and available at http://http.ietf.org). In the context of Mobile IPv6 bootstrapping typically includes discovering a home agent, configuring a corresponding home address, key distribution and setting up security associations between mobile node and home agent.

Generally, two scenarios are defined. In the so-called integrated scenario the visited network has a trust relationship with the home network, while in the so-called split scenario this is not necessarily the case. In the integrated scenario, the home agent address can be assigned to the mobile node via AAA (Authentication, Authorization, and Accounting) and DHCP (Dynamic Host Configuration Protocol), in the slit scenario the home agent address may be published in a Domain Name Service (DNS). Consequently, mobile nodes only need to be pre-configured with the domain name and mobile nodes can discover the home agent address by querying DNS.

A general problem of Mobile IP is that the home agent address must be known by all mobile nodes, since they must be able to send data and signalling packets directly to the home agent. This is considered a security problem by mobile operators (see for example Yabusaki, et al., "Mobility Management in All-IP Mobile Network: End-to-End Intelligence or Network Intelligence", IEEE Radio Communications, Dec. 2005 incorporated herein by reference). The main security threat that some mobile network operators fear in this context is a Denial-of-Service (DoS) attack against the home agent.

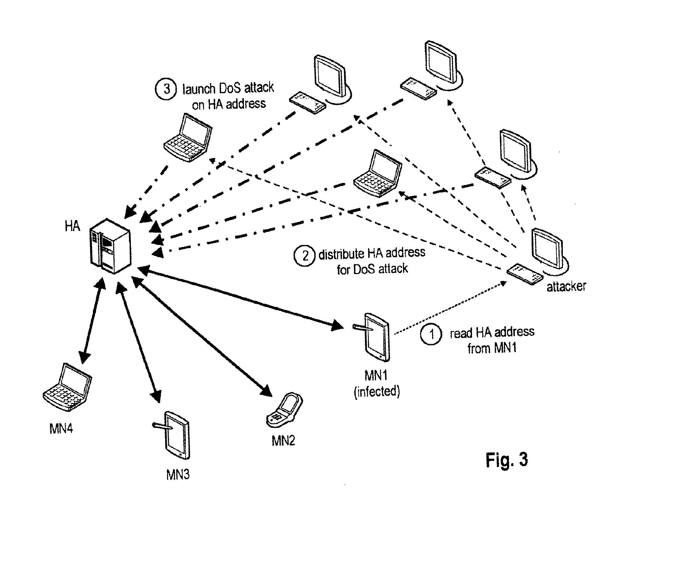

A possible attack scenario is depicted for exemplary purposed in Fig. 3. Mobile nodes MN1 to MN4 use the mobility service provided by a home agent HA. An attacker obtains the home agent address e.g. via DNS or by infecting one of the mobile nodes (in this case for example MN1) with a virus and reading the home agent address from this mobile node ①. Further, the attacker sends ② the home agent address to a farm of PCs under its control (e.g., PCs that were infected by a virus before). Subsequently, the attacker mounts ③ a coordinated Distributed Denial-of-Service attack (DDoS) against the home agent by triggering all PCs to simultaneously send packets to the eavesdropped home agent address which all need to be processed at the home agent. It may be assumed for exemplary purposes that the load on the home agent is the bottleneck and not the available bandwidth of the links and routers on the path. Of course, packets that require more processing are more effective with respect to a denial of service than packets that require less processing, i.e. less packets must be sent to overload the home agent. Examples of packets that require more processing are, e.g. binding update messages or any signalling or data packets send over the mobile node-home agent IPSec (IP Security protocol) or authentication protocol security association. Packets that require less processing are, e.g. IKE_SA_INIT messages or unprotected data packets. In any case, when the home agent has to process a sufficiently large number of messages simultaneously, it becomes overloaded and nodes, including all mobile nodes using this home agent (in this case mobile nodes MN1 to MN4) for mobility service, can no longer communicate with the home agent. As a consequence, the communication sessions of mobile nodes MN1 to MN4 would break and they would not be reachable anymore. Since the users may blame the network operator for this failure, the attacker can blackmail the mobile network operator to get monetary benefits.

There have been many mechanisms proposed to mitigate the DoS threat in general. An overview on the mechanisms may for example be found in Rocky K. C. Chang, Defending against Flooding-Based Distributed Denial-of-Service Attacks: A Tutorial, IEEE Communications Magazine, October 2002, but none of them can solve the problem of distributed denial of service attacks on Mobile IP completely.

For example, attackers often use spoofed source addresses. This could be prevented to some extent with ingress filtering as proposed in the in Ferguson et al., "Network Ingress Filtering: Defeating Denial of Service Attacks which employ IP Source Address Spoofing", IETF RFC 2827, May 2000 (available at http://www.ietf.org and incorporated herein by reference) or using probe messages/return routability checks as for example proposed in IETF RFC3775 for the route optimization mode or in US2006/0161980. However, source address spoofing can only be prevented by means of ingress filtering, if ingress filtering is deployed globally, which is not the case and unlikely to ever be the case due to missing incentives for internet service providers (lSPs). Probe messages/return routability checks cannot prevent spoofing completely and have the drawback of increased signalling overhead and packet delay. Furthermore, DDoS attacks are possible also without spoofing addresses.

Another countermeasure against DoS attacks may be the distribution of the service, as is done e.g. by Akamai. It is generally possible to deploy multiple home agents preferably at topologically distant locations to distribute the load, but this is not possible in all deployment scenarios (e.g., home agent on customer premises). Furthermore, it only raises the bar for attackers, i.e. it doesn't prevent DoS attacks per se.

Though various countermeasures to DoS attacks have been proposed, the problem of DoS attack against a home agent cannot be eliminated in networks using Mobile IPv6 since mobile nodes send signaling and data packets directly to the home agent and hence the home agent address has to be known at least by all mobile nodes. In case of a successful attack and without further measures, all mobile nodes associated with this home agent are to lose the mobility service, i.e. their communication session break.

### SUMMARY OF THE INVENTION

One object of the invention is to propose a mechanism for improving communication systems enabling mobility of mobile nodes. A further object is to consider the problem of denial of service attacks in the design of this mechanism.

At least one of the objects is solved by the subject matter of the independent claims. Advantageous embodiments are subject to the dependent claims.

One of the aspects of the invention is to provide reactive measures to react on a denial of service attack launched on a home agent. According to this aspect the home agent may be configured with plural addresses at which the home agent can be reached (so called home agent addresses). If an attack is launched against a particular one of the home addresses, the home agent may simply de-configure the attacked address. This may stop the attack (e.g. a (distributed) denial of service attack) as packets destined to the de-configured address of the home agent are no longer processed by the home agent. Further, by assigning different of the plural home agent addresses to different mobile nodes, only a subset of the mobile nodes, namely those that have used the de-configured home agent address, may be affected by the denial of service attack

Another aspect of the invention is the generation/association of the plural configured home agent addresses to the mobile nodes. The different possibilities allow implementing further reactive and also proactive measures to enhance security in mobility support. Generally, each mobile node served by the home agent may be assigned (at least one) home agent address which it may use for communication with the home agent.

In one embodiment, the home agent may configure a plurality of home agent addresses by default or on a per-mobile node basis. Accordingly one or more mobile nodes may share a single home agent address. Depending on the association scheme between home agent address and mobile node(s) - e.g. one-to-one, one-to-many or even many-to-one - the home agent may be capable of detecting a mobile node that is under attack or is controlled by an attacker and may use this information for a proactive measure to avoid further attacks.

Other embodiments relate to proactive measures in the home agent address generation. E.g. the home agent and the mobile node may mask the home agent address or use pseudo addresses of the home agent for communication might even be changed during an ongoing session. This may for example allow for preventing attacks, as the (pseudo) home address of the home agent may be more difficult to eavesdrop and/or in case it may be eavesdropped the time until the address is de-configured may not be sufficient for the eavesdropper to launch an attack.

According to one embodiment of the invention a method for mitigating the effects of a denial of service attack against a home agent supporting mobility for a plurality of mobile nodes within a communication network is proposed. In this embodiment, the home agent may be configured with a plurality of addresses at which the home agent is reachable in the communications network. Further, each of the mobile nodes may be assigned at least one of the plurality of home agent addresses. If the home agent detects a denial of service attack, it may de-configure the home agent address to which data packets of the denial of service attack are destined.

The de-configuration of an attacked address of the home agent may be considered a reactive measure to mitigate the effect of the denial of service (DoS) attack and may have the advantage that the DoS can be "stopped" as packets of the attack destined to the de-configured address are no longer processed by the home agent.

In a further embodiment the home agent may monitor the receiving rate of packets received at the home agent for each of the configured home agent addresses. Based on the monitored receiving rates the home agent may for example detect a denial of service attack. For example, the home agent may identify a home agent address for which the receiving rate of data packets destined to the home agent address is above a threshold level (which may be considered an indication of an attack), and may de-configure the identified home agent address. As outlined above, the de-configuration of the home agent address under attack may stop the attack.

Assuming for example that the home agent address is a network layer address the network layer of the home agent does no longer process the attackers'/attacker's packets. However, if a lower layer addressing scheme is used to transport the network layer protocol packets (e.g. link layer addressing, such as Medium Access Control (MAC) addresses), still the lower layer protocol needs to processes the packets before dropping same (due the home agent address matching the link layer address of the packets has been de-configured). Thus, in another embodiment of the invention the home agent advertises a link layer address of the home agent for the de-configured home agent address, wherein the advertised link layer address is different from the (correct) home agent's link layer address. This may for example result in the packets destined to the de-configured home agent address will no longer be provided to the home agent through the lower protocol layers (such as link layer) and thereby overcomes the before-mentioned problem.

Another embodiment of the invention relates to the protection of the home agent addresses configured at the home agent. For example, one option may be that the home agent address assigned to at least one mobile node is masked in the header of packets exchanged between the at least one mobile node and the home agent. Hence, the home agent address might no longer be eavesdropped by attackers on a path between mobile node and home agent. For example, the home agent address could be masked by including a pseudo home agent address being a network layer address transparent to higher protocol layers and to mobility-related security functions.

In an exemplary embodiment of the invention, Mobile IPv6 (and incorporated IPsec) is used to enable mobility of the mobile nodes. Further, IPv6 addressing may be used. In this example, keeping the pseudo home agent address transparent to higher protocol layers and to mobility-related security functions may mean that the IPv6 protocol layer of a mobile node uses the pseudo home agent address for communication with the home agent, but hides the pseudo home agent address from the IPsec and MIPv6 protocol layer, e.g. by exchanging the pseudo home agent address by a home agent address used by these protocol layers. This home agent address may be the home agent address for which the IPsec security association between mobile node and home agent is defined.

One option to generate a pseudo home agent address may be to use a keyed hash function. Further, the pseudo home agent address needs to be configured by the home agent so that an exchange of packets (signaling packets or data packets) using the pseudo home agent address is possible.

Further, according to another embodiment, both, mobile node and home agent generate a pseudo home agent address or a home agent address using a keyed hash function based on a key used for securing the exchange of data packets between home agent and mobile node. As will become apparent from the description of the various embodiments herein, there are multiple possibilities for choosing the key known to home agent and mobile node that is used to generate a pseudo home agent address or a home agent address.

Further, in another embodiment of the invention a pseudo home agent address or home agent address may be periodically changed during a session between mobile node and home agent. This may increase security as the time for the attacker to launch an attack on a pseudo home agent address or home agent address upon having knowledge thereof may not be sufficient so as to start the attack prior to the pseudo home agent address or home agent address being changed and being de-configured on the home agent.

Other embodiments of the invention relate to situations where the home agent (or another network element) assigns plural mobile nodes the same home agent address.

In one embodiment, a new different home agent address may be assigned to a respective mobile node of the plural mobile nodes upon de-configuring the home agent address assigned to the respective mobile node.

Moreover, in another embodiment, the home agent could for example maintain a record of denial of service attacks. The record may for example indicate a respective attacked home agent address and a list of mobile nodes that have been assigned the respective attacked home agent address. Alternatively, the home agent may also simply maintain a list of mobile nodes that have been assigned a specific attacked home agent address for which an attack is detected.

Further, the home agent may detect an attack on a mobile node based on the maintained record (or the lists). For example, if a particular mobile node is within the record on several attacks, the home agent may interpret this as an indication that the mobile node is attacked (for example infected by a computer virus) and/or eavesdropped by an attacker. Accordingly, the home agent may for example stop the provision of mobility services for the attacked mobile node. By this proactive measure further denial of service attacks on the home agent may be prevented.

Other embodiments of the invention relate to situations where each mobile node can be uniquely identified by its assigned home agent address. In other words, every mobile node uses a different home agent address for communicating with the home agent

A further embodiment of the invention relates to the assignment of home agent addresses to mobile nodes. For example, the home agent may generate a home agent address for a mobile node in response to receiving an anycast or multicast request sent by a mobile node for setting up a security association between the home agent and the requesting mobile node or for discovering a home agent address. Thereby (depending on the mechanism for generating the home agent address), it may be possible to provide each mobile node with a different home agent address. Upon generating the home address for the mobile node the home agent may provide the generated address to the mobile node for example by responding to the anycast or multicast request using the generated home agent address. Thus the generated address could be provided to the mobile node in a signaling message (e.g. as a parameter) or implicitly, by including the address in a header field (e.g. source address field) of a packet sent to the mobile node.

Furthermore, in another embodiment of the invention the home agent may further configure an interface with the generated home agent address for the mobile node upon generation of the home agent address.

The address generation mechanism is subject to another embodiment of the invention. For example, a seed value of the home agent may be made publicly available and a home agent address for a mobile node may be generated based on the seed value and a key used for securing the exchange of data packets between home agent and mobile node. For example, the seed value could also be a home agent address that is made public by binding the address to a domain name of the home agent in DNS.

Further, in another embodiment mobile node and home agent may both generate the same home agent address based on the seed value and the key. Accordingly, the home agent may configure an interface of the home agent with the generated home agent address.

In another embodiment of the invention the plurality of addresses configured for the home agent have a network prefix different to the network prefix according to which the home addresses of the mobile nodes are configured. This may be advantageous as the signaling overhead in the network in which the home agent is located (also referred to as the home network) may be reduced as further outlined below.

In one exemplary embodiment, the home agent addresses are network layer addresses and/or addresses according to the IPv6 protocol. Further, the home agent may for example support network layer mobility of the mobile nodes and/or the home agent and the mobile nodes implement Mobile IPv6 or Proxy Mobile IP.

Another embodiment of the invention relates to a home agent for mitigating the effects of a denial of service attack. The home agent may support mobility a plurality of mobile nodes and may comprise a processing unit of configuring a plurality of addresses at which the home agent is reachable in a communications network, and for assigning to each of the mobile nodes at least one of the plurality of home agent addresses. Furthermore, the processing unit may de-configure the home agent address to which data packets of the denial of service attack are destined, if a denial of service attack is detected by the home agent.

A further embodiment related to a home agent comprising means adapted to perform or to participate in the steps of the method for mitigating the effects of a denial of service attack according to one of the different embodiments described herein.

Another embodiment of the invention relates to a mobile node for use in a communication system supporting mobility. The mobile node may comprise a processing unit for generating a pseudo home agent address or a home agent address of the home agent to be included in the header of packets to be exchanged between mobile node and home agent, and further, a communication unit for exchanging packets with the home agent using the generated pseudo home agent address or the home agent address respectively.

In a further embodiment, the processing unit may generate the pseudo home agent address respectively the home agent address using a keyed hash function based on a key used for securing the exchange of data packets between home agent and mobile node.

Furthermore, in another embodiment, the communication unit may for example transmit an anycast or multicast request for setting up a security association between the home agent and the requesting mobile node or for discovering a home agent address to the home agent. Moreover, the communication unit may receive in response to the anycast or multicast request including a home agent address generated in response to the anycast or multicast request by the home agent.

The communication unit of the mobile node according to another exemplary embodiment may be capable of obtaining a seed value of the home agent and the mobile node's processing unit may generate a home agent address for a mobile node based on the seed value and a key used for securing the exchange of data packets between home agent and mobile node.

As mentioned previously, both, mobile node and the home agent may generate the same home agent address based on the seed value and the key.

In a further embodiment of the invention the mobile node may comprise a communication unit for obtaining at least one assigned home agent address of a home agent supporting mobility of the mobile node.

Another embodiment related to a mobile node is adapted to perform or to participate in the steps of the method for mitigating the effects of a denial of service attack according to one of the different embodiments described herein.

Furthermore, another embodiment of the invention relates to a communication system for supporting mobility of mobile nodes comprising a home agent and/or a mobile node according to one of the various embodiments described herein.

According to a further embodiment a computer-readable medium is provided that is storing instructions that, when executed by a processor (or processing unit) of a home agent, cause the home agent to mitigate the effects of a denial of service attack, wherein the home agent supports mobility a plurality of mobile nodes, by configuring a plurality of addresses at which the home agent is reachable in a communications network, assigning to each of the mobile nodes at least one of the plurality of home agent addresses, and de-configuring the home agent address to which data packets of the denial of service attack are destined, if a denial of service attack is detected by the home agent.

A computer-readable medium according to another embodiment stores instructions that, when executed by the processor of a home agent, cause the home agent to perform or to participate in the steps of the method for mitigating the effects of a denial of service attack according to one of the different embodiments described herein..

Another embodiment of the invention relates to a computer-readable medium storing instructions that, when executed by a processor of a mobile node, cause the mobile node to generate a pseudo home agent address or a home agent address of the home agent to be included in the header of packets to be exchanged between mobile node and home agent, and exchange packets with the home agent using the generated pseudo home agent address or the home agent address respectively.

A computer-readable medium according to a further embodiment stores instructions that, when executed by the processor of a mobile node, cause the mobile node to perform or to participate in the steps of the method f or mitigating the effects of a denial of service attack according to one of the different embodiments described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: exemplifies the use of bi-directional tunneling for a communication between a mobile node and a correspondent node according to MIPv6,
- **Fig. 2**: exemplifies the use of route optimization for a communication between a mobile node and a correspondent node according to MIPv6,
- **Fig. 3**: shows an exemplary scenario of a Distributed Denial of Service attack (DDoS) launched on a home agent serving plural mobile nodes,
- **Fig. 4**: shows an example of a DDoS attack scenario launched on a home agent serving plural mobile nodes and how the attack is stopped according to one embodiment of the invention,
- **Fig. 5**: shows a flow chart exemplarily illustrating the steps performed by the home agent in the scenario of Fig. 4 according to an embodiment of the invention,
- **Fig. 6**: shows an exemplary flow chart illustrating different aspects of a home address generation, configuration, distribution and de-configuration procedures according to an exemplary embodiment of the invention, and
- **Fig. 7**: shows an exemplary protocol stack at a mobile node and a home agent according to one embodiment of the invention.

### DETAILED DESCRIPTION OF THE INVENTION

The following paragraphs will describe various embodiments of the invention. For exemplary purposes only, most of the embodiments are outlined in relation to a communication network using MIPv6 as discussed in the Background Art section above, but the invention is not limited to its use in this particular exemplary communication network.

Accordingly, also the terminology used herein mainly bases on the terminology used by the IETF in the standardization of Mobile IPv6. However, the terminology and the description of the embodiments with respect to and Mobile IPv6 is not intended to limit the principles and ideas of the inventions to such systems and the use of this protocol only.

The explanations given in the Technical Background section above are intended to better understand the specific exemplary embodiments described herein and should not be understood as limiting the invention to the described specific implementations of processes and functions in the mobile communication network. Nevertheless, the improvements proposed herein may be readily applied in the protocols/systems described in the Technological Background section and may in some embodiments of the invention also make use of standard and improved procedures of theses protocols/systems.

### Definitions

In the following a definition of several terms frequently used in this document will be provided.

A mobile node is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or nodes.

An address of a node or functional entity is a global or site-local identifier of the node or functional entity being either of permanent or temporarily limited validity. Typically, in some of the embodiments herein an address is a network layer address, i.e. is used for identification of nodes and network entities on the network layer of the OSI reference model (see for example the textbook "Computer Networks", by Andrew S. Tanenbaum, fourth edition, 2003, Prentice Hall PTR, chapter 1.4 incorporated herein by reference). The network layer or Layer 3 typically provides the functional and procedural means for transferring variable length packets from a source to a destination via one or more networks.

Typically, an interface of a node is assigned one address. However, it would also be possible to assign multiple addresses to a single interface. Further, in case of a node comprising plural functional entities, one or more addresses may be associated to a logical interface of a respective functional entity.

Generally, each network is identified by at least one number e.g. a so-called prefix. This number allows for routing of packets to the nodes in the network. Furthermore, this number refers to a pool of identifiers that can be used by the nodes in the network. An address in a network is an identifier out of the pool of identifiers. For example in IPv6, the number of a network is the IPv6 prefix and the address in a network is the IPv6 address composed of the IPv6 prefix and an IPv6 host part. In different networks, for example in a home network and a foreign network different addresses are used.

In some embodiments of the invention the IPv6 protocol is used on the network layer. In this case the address is an identifier for a single (logical) interface of a node such that a packet sent to it from another IPv6 subnet is delivered via a lower-layer link to the (logical) interface identified by that address.

A home network (i.e., the home link) of a mobile node is typically identified by the location of the home agent at which the mobile node registers its care-of address(es) for a given home address of the mobile node.

A home address is an address assigned to a mobile node, used as the permanent address of the mobile node. This address is has the prefix of the mobile node's home network. A care-of address is an address associated with a mobile node while visiting a foreign network. The prefix of the care-of address is typically equal to the prefix of the visited network. A mobile node may have one or more care-of addresses simultaneously.

A home agent is a router or a functional entity providing a routing function on a mobile node's home network with which the mobile node registers its current care-of address(es). While the mobile node is away from home, the home agent may provide mobility service to the mobile node e.g. by intercepting packets on the home link destined to the mobile node's home address, encapsulating them, and tunneling them to one of or a some of the mobile node's registered care-of address(es).

A security association may be defined as a set of security information that two nodes or functional entities share in order to support secure communication. For example, a security association may include a data encryption algorithm, data encryption key(s) (e.g. a secret key or a public/private key pair, initialization vector(s), digital certificates, etc.) Typically, there is a security association provided between a mobile node in a foreign network and its home agent in the home network. Thus, even if the mobile node is attached to a foreign network, encrypted and/or authenticated/authorized communication between the home agent and the mobile node (e.g. through a secured tunnel) may be ensured. The security association is typically bound to the addresses of the endpoints, i.e. to the home agent address and the one of the mobile node's addresses (typically the home address).

One of the aspects of the invention is to provide reactive measures to react on a denial of service attack launched on a home agent. According to this aspect the home agent may be configured with plural addresses at which the home agent can be reached (so called home agent addresses). In one embodiment each mobile node using the mobility service (home agent function) offered by the home agent may be assigned an individual home agent address for use in communication with the home agent. Accordingly, the respective home agent addresses assigned by the home agent or another network element should be configured at an interface of the home agent so as to allow packet exchange using the respective home agent address. Since different home agent addresses are assigned to different mobile nodes, it is much more difficult for an attacker to obtain an address that is configured at the home agent and could be used for a denial of service attack. Instead of for example just querying DNS, the attacker may need to impersonate a mobile node, eavesdrop on the path between a mobile node and a home agent, or bring a mobile node under its control (e.g. by infecting it with a virus) in order to obtain home agent addresses.

If an attack is launched against a particular one of the home addresses, the home agent may take appropriate measures to stop the attack, for example by simply de-configuring the attacked address, and optionally further steps to prevent further attacks, for example stopping the mobility services provided to an attacked mobile node. The de-configuration of individual attacked addresses of the home agent may stop the attack (e.g. a (distributed) denial of service attack) as packets destined to the de-configured address are no longer processed by the home agent.

Another aspect of the invention is the generation/association of the home agent addresses. Generally, each mobile node served by the home agent may be assigned (at least one) home agent address which it may use for communication with the home agent. In one embodiment, the home agent may configure a plurality of home agent addresses by default or on a per-mobile node basis. Accordingly one or more mobile nodes may share a single home agent address. Alternatively, the home agent may generate and assign an individual home agent address to a respective mobile node.

Depending on the association scheme between home agent address and mobile node(s) - e.g. one-to-one, one-to-many or even many-to-one - the home agent may be capable of detecting a mobile node that is under attack or is controlled by an attacker and may use this information for a reactive measure to avoid further attacks. For example, if there is a one-to-one correspondence between home agent address and mobile node, the home agent may assume the respective mobile node to be under attack, if a single or multiple attacks on the home agent are detected in which the respective home agent address assigned to the mobile node is used. If there is a one-to-many relationship, the home agent may for example relocate the mobile nodes having been assigned a home agent address for which an attack has been launched to identify the attacked mobile node after further attacks against other home agent addresses by maintaining a list of attacks (see below). For example, each of the mobile nodes are each assigned to different groups of mobile nodes having distinct home agent addresses. In this case, the home agent may detect an attacked mobile node by checking whether the mobile node is comprised in groups of mobile nodes of which the respectively assigned home agent addresses have been/are attacked.

Other embodiments relate to proactive measures to prevent attacks. One proactive option may be that the home agent and the mobile node may mask the home agent address or use pseudo addresses of the home agent for communication that may even be changed during an ongoing session. This may for example allow for preventing attacks, as the (pseudo) home address of the home agent may be more difficult to eavesdrop by an attacker and/or in case the home agent address can be eavesdropped by an attacker, the time until the eavesdropped address is de-configured - i.e. another (pseudo) home agent address is used for communication - may not be sufficient for the attacker to launch an attack.

Another aspect of the invention is the suggestion of a new mechanism for generating a home agent address. For example, the home agent may configure and generate individual home agent addresses per mobile node on a per need basis, for example before starting the session, upon a mobile node requesting to establish a security association with the home agent, upon discovering a home agent address, or during a session, when a binding update is received or when a certain number of data packets were received by the mobile node.

In another embodiment, it may be supposed that the home agent maintains a mapping of home agent addresses and mobile node addresses. This may facilitate the detection of mobile nodes that have been attacked (e.g. by eavesdropping or being infected with a computer virus) to obtain a home agent address as target for DoS attacks. A further mechanism that may be advantageous in this respect is the home agent monitoring the receiving rate of the packets received for the individual home agent addresses. If the packet rate destined to a particular home agent address increases above a certain threshold rate, the home agent may consider this an indication of an attack. One reactive countermeasure in this case may be a de-configuration of the home agent address that is under attack as explained previously.

The threshold rate may for example be calculated based on the sum of the maximum allowed data traffic rate of each mobile node that has a specific home agent address assigned. This solution may be especially applicable in cases where QoS provisioning is used since in this case all relevant information for determining the threshold value may be available at the home agent. After de-configuring the address by the home agent, packets of the attack (potentially a distributed denial of service attack) are not processed by the home agent anymore and the attack is thereby stopped. Active mobility sessions using other home agent addresses on the same home agent are not affected by the address de-configuration so that no service interruption will be experiences for mobility sessions using other home agent address(es) than the de-configured address.

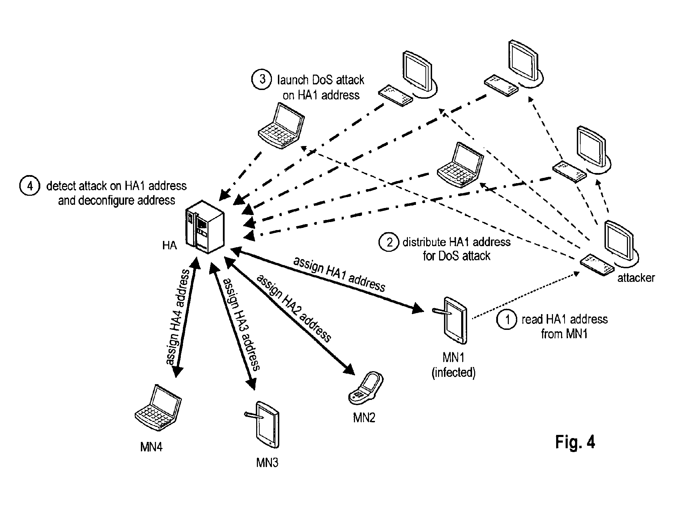

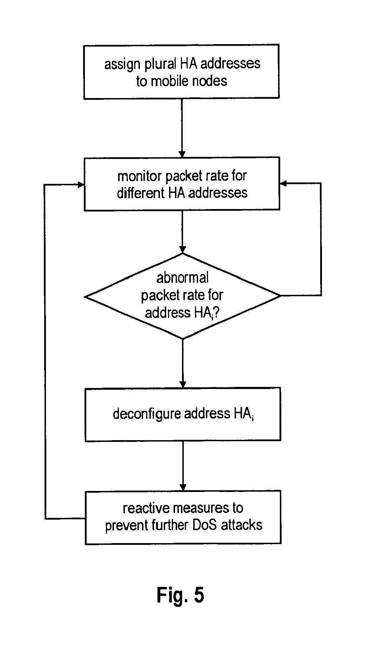

Fig. 4 shows an example of a DDoS attack scenario and how the attack is stopped according to one embodiment of the invention. Further, Fig. 5 shows a flow chart exemplarily illustrating the steps performed by the home agent in the scenario of Fig. 4 according to an embodiment of the invention. The home agent HA is assumed to have assigned (step 501) different home agent addresses HA1 through HA4 to the mobile nodes MN1 through MN4. In this example, each mobile node has been assigned an individual home agent address being different from the other home agent addresses. Moreover, in this example mobile node MN1 is assumed to have been infected with a computer virus which allows an attacker to read ① the home agent address HA1 assigned to the mobile node MN1.

The attacker may further distribute ② the home agent address HA1 to further computing devices under its control so as to initiate a distributed denial of service attack on the home agent HA by sending a flood of packets to home agent address HA1 to "overload" the home agent.

As shown in Fig. 5, the home agent HA may continuously monitor 502 the received packet rates for its different configured home agent addresses HA1 through HA4. For example, by comparing the measured packet rate to a threshold value/rate the home agent may detect 503 an abnormal increase in the detected packet rate which may be considered an indication of an attack being launched against the home agent HA. For example, if the computing devices under control of the attacker start ③ the coordinated attack on the home agent HA, an abnormal increase of the data packet receiving rate for home agent address HA1 may be detected 503, ④ by the home agent HA.

In response to this detection, the home agent HA may take reactive countermeasures to stop the attack. In this exemplary embodiment, the home agent HA de-configures 504, ④ the home agent address HA1 so that no packets destined to this address will be further processed by the home agent.

Optionally, the home agent HA may also take 505 further measures to prevent further attacks. This may for example include the detection of a mobile node or mobile nodes being under attack and (further optionally) stopping the mobility service for the attacked mobile node(s) - such as for example stopping to provide home agent functions to the mobile node(s).

In the subsequent sections several additional aspect of the invention and further improvements of the basic procedures described above according to different embodiments of the invention will be discussed in further detail.

Considering the exemplary embodiments outlined with respect to Fig. 4 and Fig. 5 above, it is noted that the proposed mechanism may not prevent a DoS attack on the home agent HA per se. One reason for this is that after de-configuring a home agent address HA1, packets addressed to this address may be still processed by the home agent's lower layer protocols.

For example, when assuming the home agent addresses to be configured at the network layer, the link layer protocol(s) (the link layer is frequently also denoted Medium Access Control (MAC) layer) may still need to process the packets destined to the de-configured network layer address as the existing address resolution cache entries (such as ARP/NDP cache entries) in the on-link routers may not yet have been expired or updated (ARP = Address Resolution Protocol, NDP = Neighbor Discovery Protocol - see Plummer, "An Ethernet Address Resolution Protocol -- or -- Converting Network Protocol Addresses to 48.bit Ethernet Address for Transmission on Ethernet Hardware", IETF RFC 826, November 1982 and Narten et al., "Neighbor Discovery for IP Version 6 (IPv6)", IETF RFC 2461, December 1998, both documents available at http://www.ietf.org and incorporated herein by reference).

To overcome this potential drawback, according to one embodiment of the invention the home agent may advertise a lower layer address (such as a link layer address of the home agent) for the de-configured home agent address, wherein the advertised lower layer address is different from the home agent's lower layer address. For example, protocols providing address resolution functionality (e.g. NDP and ARP as mentioned above) may be suitable for this purpose.

In one example, the de-configured home agent address and the advertised lower layer address are not configured on any node on the home agent's network. This may affect the routers or hosts of the network where the home agent is situated to drop the packets destined to the de-configured home agent address. Another option would be to deploy a dedicated server in the home agent's network that takes over the de-configured home agent address. The lower layer address advertised by the home agent should then be equal to the lower layer address of the dedicated server. Both options may be advantageous, as packets destined to the de-configured home agent address are no longer received at the home agent and may thus no longer utilize system resources for processing at the home agent.

One example, how to advertise a new lower layer address for the de-configured home agent address may be the home agent sending one or more unsolicited Neighbour Advertisement message (if the home agent addresses are an IPv6 addresses) or gratuitous ARP reply (if the home agent addresses are an IPv4 addresses) with the override flag set. These messages configure a new association of the de-configured home agent address and another link layer address different from the correct home agents link layer address for the home agent. Consequently, the neighbor cache in hosts and routers on the link is updated and packets addressed to home agent address HA1 are no longer processed by the home agent anymore, neither at the network layer (e.g. IPv4 or IPv6) nor at link layer (e.g. MAC).

Another aspect of the invention is to suggest proactive measures that may at least increase the difficulty for an attack. According to one embodiment, the home agent addresses assigned to mobile nodes may be hidden from potential attackers. Accordingly, potential attackers may no longer eavesdrop a configured home agent address so that an attack may be prevented. Of course, if a mobile node is under control of an attacker, e.g. due to a computer virus infection, the attacker might still obtain a valid home agent address.

Generally, without further measures, it is typically possible for an attacker on the path between mobile nodes and the home agent to figure out home agent addresses just by monitoring the source and destination address in the headers (e.g. IP headers) of signaling and data packets sent and received by mobile nodes. As suggested above, one option to prevent this reading of the home agent address from the packets exchanged between mobile nodes and home agent, the home agent address in the header (destination address for packets sent from mobile node to home agent and source address for packets sent from home agent to mobile node) may be hidden from eavesdroppers. One exemplary option to realize this may be to encrypt and tunnel the packets to a gateway. However, this option may have the potential drawback that the gateway's address could be revealed and the gateway may be vulnerable to DoS attacks in the same way the home agent was before.

Another option according to another embodiment of the invention is to hide the home agent address from potential attackers on path or at least to make it less susceptible for an attack by frequently changing the home agent address assigned to one or more mobile nodes. Frequently changing the address may not give the attacker enough time to disseminate the address and co-ordinate the attack before the address has again changed and de-configured from the home agent interface. However, changing addresses in the header of packets transmitted from home agent to mobile node may result in problems for higher layer protocols, such as IPsec operating on top of IPv6, as the security association may be bound to individual addresses of the communicating peers.

One embodiment of the invention suggests an extension to protocols establishing the security association so that the individual addresses to which an established security association is bound may be updated. A home agent address change (but also a mobile node address change) during an ongoing session may require further signaling for updating the addresses of the security association. One possible solution may be to send a message containing the new address to which the security association is bound to the respective other peer (i.e. mobile node or home agent). This signaling message may for example protected be protected by the security association. The signaling message(s) for updating the addresses bound to a security association may be design similar to the messages as for example defined in Eronen, "IKEv2 Mobility and Multihoming Protocol (MOBIKE)", IETF RFC 4555, June 2006 (available at http://www.ietf.org and incorporated herein by reference) or similar to the messages for establishing a new security association (see e.g. Haley et al., "Mobility Header Home Agent Switch Message", IETF Internet Draft, draft-ietf-mip6-ha-switch-00.txt, June 2006).

Another alternative solution according to another embodiment of the invention that may overcome the potential problems of an address change in an ongoing session is to keep changes of source/destination address transparent to higher layer protocols, such as IPsec. This may for example be realized by using a pseudo home agent address in the header of packets transmitted between home agent and mobile node. The IP protocol layer in the mobile node (and home agent) may then replace the pseudo home agent address by the ("real") assigned home agent address before passing the packets to the next higher layer in the protocol stack. As the pseudo home agent addresses are used for communication between mobile node and home agent, the at least one interface of the home agent should be configured with the respective pseudo address(es). If the pseudo address is changed, the old pseudo address may be de-configured from the home agent's interface.

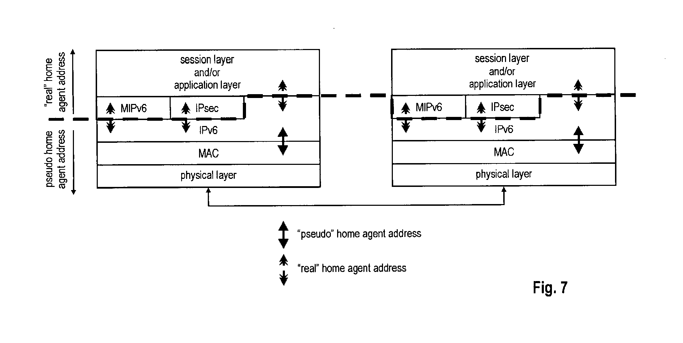

Fig. 7 illustrates an exemplary protocol stack at a mobile node and a home agent according to one embodiment of the invention. Referencing this protocol exemplary stack the use of pseudo home agent addresses will be explained in the following in further detail. In this exemplary embodiment, the implementation of the physical layer (i.e. the physical layer protocol) may not be of particular importance so that the lowest layer has been generically referred to as "physical layer". Further, the link layer may be implemented using a Medium Access Control layer protocol.

This protocol layer interfaces with the network layer, which provides IPv6 in this example. Here, for addressing between IPv6 protocol and MAC protocol the pseudo home agent address is used, i.e. in this example the headers of IPv6 packets passed to the MAC layer include a pseudo home agent address as the destination address for packets destined from mobile node to home agent or as the source address for packets destined from home agent to mobile node. If the IPv6 packets carrying higher layer data need to be passed to a respective higher layer, such as MIPv6, IPsec, as session layer and/or application layer protocol, the pseudo home agent addresses are replaced by the "real" home agent address, i.e. the home agent address known to the respective higher layer protocols. In this way, the use of the pseudo home agent address may be transparent to the higher layer protocol(s) used in the protocol stack.

Keeping the pseudo home agent addresses transparent from protocols that provide security function to the mobile node-home agent communication, such as for example IPsec may be advantageous. Assuming that a security association for a particular home agent address is established between mobile node and home agent (which would for example the case in MIPv6) each used home agent address would typically require a separate security association. Thus, by means of keeping potentially frequently changing pseudo home agent addresses transparent from security related functions or protocols (as for example IPsec for MIPv6 as shown in Fig. 7) one security association established for the "real" home agent address may be used independent from the actually used "pseudo" home agent addresses employed for communication by the underlying network layer protocol providing an addressing function (such as IPv6 in the example of Fig. 7).

Another potential problem that may be related to the change of the home agent address may be that the changing addresses is typically utilized in the routing of the packets exchanged between mobile node and home agent - e.g. if the changing addresses need to be set as source address and/or destination address of a packet is set in the packet header. Since routing is typically based on the prefix of the respective destination address set in the packet header, another possible solution for hiding the configured home agent addresses from potential attackers may be to mask the interface identifier only. Considering the exemplary case of using the pseudo home agent addresses the problem and potential solutions are similar, as also these addresses typically need to be configured at the home agent so as to make the home agent reachable at the pseudo home agent address(es) which this implies that also the pseudo home agent address(es) of a home agent can be a target of a DoS attack.

Consequently, it appears advantageous that no home agent address that is used as a destination or source address in the packet headers should be used for a long time. In an embodiment the invention, the home agent address assigned to one or more mobile nodes may thus be periodically changed by the home agent mobile nodes. If the change of the home agent address should be kept transparent to higher layers, the pseudo home agent addresses used by the mobile nodes may be changed periodically. Assuming for exemplary purposes that an attacker needs approximately 30 minutes to obtain a currently valid (pseudo) home agent address, to distribute the valid address to computing devices under its control and to launch a DDoS attack, the (pseudo) home agent addresses assigned to the mobile nodes may be changed more frequently than in 30 minutes intervals, e.g. every 20 minutes or the like. This helps not only against eavesdropping of home agent addresses, but also against attackers that have mobile nodes under their control. If the home agent address changes frequently enough, there may not be enough time for the attacker to find out home agent addresses, distribute them, and initiate the attack.

When changing the real home agent address for a mobile node or for mobile nodes, it appears generally desirable to keep active mobility sessions running. One possible solution according to one embodiment of the invention is therefore to relocate the mobile nodes to new home agent addresses, e.g. using the home agent switch protocols currently in development in the IETF mip6 working group (see for example Wakikawa, "Home Agent Reliability Protocol", IETF Internet Draft, draft-ieff-mip6-hareliability-OO.txt, June 2006] and Haley et al., "Mobility Header Home Agent Switch Message", IETF Internet Draft, draft-ietf-mip6-ha-switch-00.txt, June 2006; both documents available at http://www.ietf.org and incorporated herein by reference).

There may be several different possibilities how changes of the (pseudo) home agent addresses can be achieved. For example, in one embodiment a new (pseudo) home agent address may be generated using a keyed hash function. The key used for generating the address using a key function may for example be derived from the key shared between mobile node and home agent for authenticating binding update messages.

In a variation of this embodiment, the new (pseudo) address may be generated every x^{th} packet. Accordingly, besides the key hash function the value of a counter may be included in the key generation to generate different interface identifiers for every x^{th} packet. In the extreme case, the integer x is 1 and every packet exchanged between mobile node and home agent has another destination/source address ((pseudo) home agent address). The counter may e.g. be a packet counter or the sequence number of the binding update message.

Since the home agent typically needs to be configured with the (pseudo) home agent address to be able to receive packets from the mobile node, the home agent may not only determine the next destination address expected as the new home agent address by the mobile node(s) but may further configure at least one interface with this new address so that packet destined to this new address may be properly received. To accommodate packet loss, the home agent may for example configure more than only the next expected address (i.e. may configure several - e.g. a number of n - addresses simultaneously for subsequent use).

To prevent future attacks, it may be desirable to identify a mobile node under control of an attacker (e.g. infected with a virus). One aspect of the invention relates to the detection of attacked mobile nodes and further to react accordingly. For example, the home agent can then stop providing mobility service and stop assigning home agent addresses to an attacked mobile node as long as it has not been assured that the mobile terminal is no longer vulnerable for attacks (e.g. until the mobile node having performed a virus check and has removed the computer virus).

If each mobile node is assigned a different home agent address, it is trivial for the home agent to identify the mobile node that has revealed the home agent address to the attacker. In this situation it may be sufficient for the home agent to maintain a list of attacked home agent addresses and the corresponding mobile node addresses that had the corresponding home agent address assigned. This list may allow for immediately identifying an attacked mobile node.

Though possible, it may be however advantageous to not react on the first detected attack on a home agent address uniquely assigned to a mobile node. For instance, the monitoring of the packet rate for individual home agent addresses may not allow distinguishing whether an attacker is on path between mobile node and home agent and eavesdrops the home agent address or whether the mobile node is indeed "permanently" und control of an attacker. However, the record on the detected attacks (e.g. identifying the respective attacked home agent address and the mobile node(s) that has or have been assigned this address, and optionally further information such as the point in time of the attack) maintained by the home agent may be used to distinguish between an occasional "on path attack" and mobile nodes under control of an attacker. For example, if a mobile node (e.g. identified by its home address) is comprised in several records of attacks (e.g. in more than a threshold number of attacks within a given time span), this may be considered an indication that the mobile node is frequently attacked and thus vulnerable to attacks or even controlled by an attacker.

According to one exemplary embodiment the home agent may decide to no longer provide a mobility service to the mobile node if detecting a potentially attacked mobile node. Alternatively, the home agent may also first test whether the mobile terminal is indeed under control of an attacker or even itself responsible for attacks before taking any countermeasures to prevent further attacks. For example, the potentially attacked mobile node may be assigned a home agent address not used by other mobile nodes served by the home agent one or more times. If this address (these addresses) become subject to an attack, the home agent may consider this a confirmation of its initial suspicion and may stop providing mobility functions to the mobile node.

As indicated above, a one-to-one correspondence between configured home agent addresses and mobile nodes may be advantageous, e.g. in the context of identifying mobile nodes that are attacked or that are themselves attackers. However, a potential problem may be that it is not possible to configure thousands of addresses on the home agent interface, e.g. because the operation system does only support a limit number of simultaneously configured addresses.

In this case, multiple mobile nodes may be assigned the same home agent address. Of course, in this scenario it is no longer trivial to identify mobile nodes under control of an attacker out of the set of mobile nodes having assigned the same home agent address. Essentially, also this potential problem may be mitigated by maintaining records on the encountered attacks as described above. Additionally, upon detecting an attack on a home agent address assigned to a group of mobile nodes, the home agent may for example relocate every mobile node that has a home agent address under attack to another group of terminals being assigned a different home agent address. Similar to the example described above, if after multiple attacks only a single or only a few mobile nodes have been involved in multiple of a recent series of attacks, the respective mobile nodes may be considered under control of the attacker and appropriate countermeasures may be taken as outlined above.

Another consequence of configuring many per-mobile node home agent addresses on a single home agent may be that the ARP/NDP overhead may significantly increase on the home link in which the home agent is located, e.g. due to Duplicate Address Detection (DAD) and address resolution. Therefore according to another embodiment of the invention a home agent may use a prefix configured on its network interface(s) exclusively for the home agent addresses. This prefix may be different from any home link prefix (i.e. different from the prefix of mobile nodes' home address).

Hence, the home agent may internally ensure that no duplicate home agent addresses exist and DAD signalling for those addresses may be omitted. Another option may be that every mobile node gets a different home prefix assigned and that the prefix of the home agent address assigned to a specific mobile node matches the prefix of the mobile node's home address. Hence, only mobile node and home agent have configured an address from the same prefix and no DAD is required if the home agent assigns the home address to the mobile node. Furthermore, address resolution signaling is almost zero, if home agent and mobile node use the source/target link layer address in NS and RS/RA packets as for example outlined in IETF RFC 2461 mentioned previously herein.

Further, the subsequent sections will mainly focus on different embodiments of the invention where each mobile node is assigned a different home agent address(es). In view of the desire to have a one-to-one correspondence between home agent addresses and mobile nodes, different mechanisms capable of assigning different home agent addresses to different mobile nodes, ideally a different home agent address for every mobile node, are proposed in the following. It should be however noted that the invention can be used with any home agent address assignment/discovery mechanism and is not limited to work only with the mechanisms according to the following embodiments. Furthermore, some of the described mechanisms can be used to assign the same home agent address to multiple mobile nodes.

An address assignment scheme according to one exemplary embodiment of the invention is based on a per-mobile node home agent addresses assignment by use of DHCP. One possible implantation of DHCP based address assignment may use of the principles known from Chowdhury at al., "MIP6-bootstrapping via DHCPv6 for the Integrated Scenario", IETF Internet Draft, draft-ietf-mip6-bootstrapping-integrated-dhc-01.txt, June 2006 (available at http://www.ietf.org and incorporated herein by reference). According to this document, the AAA server in the home network (also referred to as AAAH) assigns a home agent address from the home network to the mobile node. The basic procedure is the following: During network access authentication, the mobile node interacts with the Network Access Server (NAS), which in turn interacts with the AAAH server. During this interaction, the AAAH server signals the home agent address (comprised in home agent information) to the NAS. The mobile node then sends a DHCP request with some additional information about the home network. A DHCP relay that is co-located with the NAS intercepts this message, includes the home agent address received from AAAH and forwards it to the DHCP server. The DHCP server adds the home agent address and potentially other configuration information to the DHCP reply message and sends it via the DHCP relay to the mobile node.

In this embodiment of the invention, this operation is changed in that the AAAH server may for example assign a different home agent address to every mobile node. This operation requires the presence of an integrated scenario, i.e., the visited network provider is the same as or has a trust relationship with the home network provider.

Another mechanism to assign home agent addresses to the mobile nodes according to another embodiment of the invention may be using anycast- or multicast-based home agent discovery. For instance, the home agent address for a mobile node may be generated as part of a procedure for establishing a security association between mobile node and home agent. In MIPv6 there is typically the Internet Key Exchange protocol (commonly abbreviated IKE) used for establishing a security association. The IKE protocol typically uses a Diffie-Hellman key exchange to set up a shared session secret. From this shared session secret, the cryptographic keys are derived for communication between mobile node and home agent. Furthermore, public key techniques or a preshared key (also referred to as a preshared secret) may be used to mutually authenticate the communicating nodes, i.e. mobile node and home agent. For details it is referred to Kaufman, "Internet Key Exchange (IKEv2) Protocol ", IETF RFC 4306, December 2005 (available at http://www.ietf.org and incorporated herein by reference).

In one exemplary embodiment, upon reception of an IKE_SA_INIT message sent by a mobile node to an anycast home agent address as described in Dupont and Weniger, "IKEv2-based Home Agent Assignment in Mobile IPv6/NEMO Bootstrapping", IETF Internet Draft, draft-dupont-ikev2-haassign-01.txt, March 2006, the home agent may generate an home agent address, and may further configure at least one of its interfaces with this generated address. In response to the IKE_SA_INIT message from the mobile node the home agent may send a reply message using the generated home agent address as the source address of the message.

The home agent address may for example be generated using a random number generator or can be determined using a database access or using a mathematical function which are based on the source address of the IKE_SA_INIT (i.e., the mobile node's address). However, to prevent a new DoS attack that generates millions of home agent addresses at the home agent, the home agent according to another embodiment may limit the number of simultaneously configured home agent addresses used for not-yet-completed IKE-sessions, i.e. for sessions where the mobile node has not yet successfully authenticated itself to the home agent. This per-mobile node home agent address assignment mechanism is more general than the one based on DHCP, since no trust relationship between visited and home network provider is required (i.e. the split scenario). Another alternative anycast-based discovery mechanism that is used in another embodiment of the invention instead of the IKE-based mechanism described above may be the DHAAD discovery mechanism described in IETF RFC 3775. Here, the home agent generates a new home agent address upon receiving the DHAAD request message and puts the newly generated address in the DHAAD reply message.

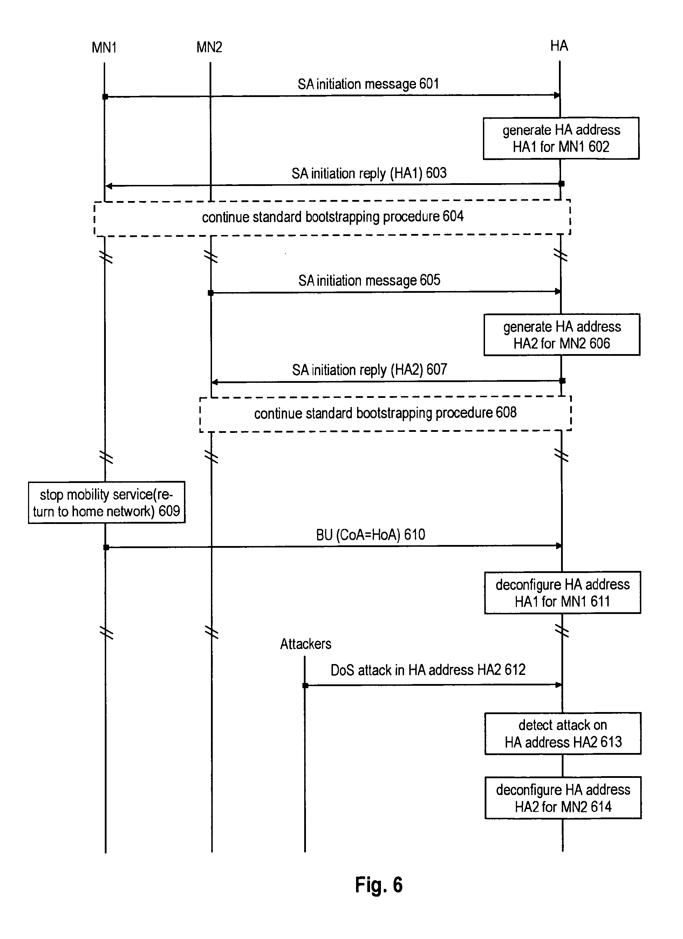

Fig. 6 shows an exemplary flow chart illustrating different aspects of a home address generation, configuration, distribution and de-configuration procedures according to an exemplary embodiment of the invention.

In the embodiment of the invention it is assumed a security related protocol such as for example IKE is used for establishing a security association between home agent and mobile node. According to an exemplary embodiment, the establishment procedure of the security association (SA) may comprise the generation and distribution of an individual home agent address for a mobile terminal. For example, upon the mobile node MN1 sending 601 a SA initiation message (for example an IKE_SA_INIT message) to its home agent HA. This message may be for example an anycast request message sent to home link. The home agent HA generates 602 a home agent address in response to this message. For example, the home agent HA may use a hashed key function to generate an individual IP address HA1, the home agent address in this example, for the requesting mobile node MN1. Furthermore, the home agent HA may further configure one of its interfaces on the home link to with the generated address HA1. In response to the SA initiation message, the home agent HA returns 603 a SA initiation reply to mobile node MN1. This response message may for example be a packet, where the new generated home agent address HA1 is set as the source address of the packet. The mobile node MN1 reads the home agent address HA1 from the reply message and is thereby informed on the home agent address HA1 to use for further communication and for which address the security association is established. As indicated by the dotted rectangle, home agent HA and mobile node MN1 further proceed 604 with the standard bootstrapping procedures for establishing the security association, which may be for example used to secure packets (e.g. signaling and data) tunneled between mobile node MN1 and home agent HA within a session, similar to or as in MIPv6 as explained with respect to Fig. 1.

Moreover, Fig. 6 further illustrates the generation and distribution of a home agent address HA2 for a second mobile node MN2 in steps 605, 606, 607 and 608, which is similar to the procedure for mobile node MN1 described above. Further, in another embodiment, it may be assumed that mobile node MN1 stops 609 the mobility service. E.g. upon the mobile node MN1 returning home - i.e. attaching to the home link in a MIPv6 environment - the mobile node MN1 may deregister its care-of address at the home agent. This may for example achieved by sending 610 a binding update to the home agent HA indicating the mobile node's home address as the new care-of address. Upon detecting that the mobility service is to be stopped at the home agent HA, e.g. based on the binding update, the home agent HA may de-configure 611 the home agent address HA1 previously assigned to the mobile node MN1.

In another exemplary embodiment, it may be assumed that an attacker has gained knowledge of the home agent address HA2 of mobile node MN2. The attacker is assumed to launch 612 a (D)DoS attack on the home agent HA using home agent address HA2. The home agent HA may next detect 613 the attack, e.g. based on a sudden increase of the packet reception rate of packets destined to HA2. Accordingly, the home agent may de-configure 614 the home agent address HA2 for MN2. Optionally the home agent HA may further assign a new home agent address to mobile node MN2, or if the mobile node MN2 has been involved in several past attacks on the home agent HA, the home agent HA may no longer provide mobility functions to mobile node MN2 as outlined previously herein.

A further alternative mechanism for per-mobile node home agent address assignment in the split scenario according to another embodiment of the invention is to combine DNS for home agent address discovery as described in Giaretta et al., "Mobile IPv6 bootstrapping in split scenario", IETF Internet Draft, draft-ietf-mip6-bootstrapping-split-02.txt, March 2006 (available at http://www.ietf.org and incorporated herein by reference) with a shared secret-based home agent address generation. In this exemplary embodiment, the home agent may for example publish a seed value (which may also be a publicly known home agent address) in DNS and the mobile node and home agent use this seed value together with a shared key to calculate a per-mobile node home agent address known only by home agent and mobile node.

The key used in the generation of this home agent address may for example be derived from the shared key needed for securing Mobile IP signaling (e.g. from a return routability procedure as described in IETF RFC 3775 or from the IPsec related signaling to establish a security association).

The function for calculating or generating the home agent address may for example be a keyed hash function. Assuming for exemplary purposes that PHA be the public home agent address published in DNS and k the shared secret known only by mobile node and home agent, then mobile node and home agent could for example calculate the per-mobile node home agent address MHA using the function MHA = H(k, PHA), where H is a keyed hash function using key k applied to the public home agent address PHA. Further, in a variation, the prefix may be changed to a pre-configured one or to one assigned by the home agent. The home agent may for example change the per-mobile node home agent address either by changing the public home agent address PHA or by deriving a new key k. Alternatively, other parameters such as a sequence numbers or packet counters may be considered in the key generation mechanism as already discussed previously herein.

An advantage of this home address generation mechanism may be that no signaling is required for per-mobile node home agent address assignment. However, it may be difficult to assign a specific home agent address to a mobile node or to assign the same home agent address to multiple mobile nodes.

Further, another exemplary home address distribution mechanism according to another embodiment is especially applicable to situations where a combination of Proxy Mobile IP (also referred to as PMIP - see Chowdhury at al., "Network Based Layer 3 Connectivity and Mobility Management for IPv6", IETF Internet Draft, draft-chowdhury-netmip6-01.txt, September 2006, available at http://www,ietf.org and incorporated herein by reference) and Mobile IPv6 is used. In this embodiment, particular home agent addresses may be exclusively assigned to the MIP proxy agents (e.g., ARs in Proxy MIP) instead of the mobile nodes. This may be advantageous, since those agents are network entities under the network provider's control and may thus be assumed being more secure than mobile nodes so that overall a proxy under control of an attacker is less likely. Hence, if the proxies use a different home agent address than mobile nodes, an infected mobile node can keep using the PMIP mobility service although the same home agent is used for MIP and PMIP service and the home agent address used by the infected mobile node for MIP service has been de-configured by the home agent due to an attack.

Another embodiment of the invention relates to the implementation of the above described various embodiments using hardware and software. It is recognized that the various embodiments of the invention may be implemented or performed using computing devices (processors or processing units). A computing device, processor or processing unit may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for mitigating the effects of a denial of service attack against a home agent supporting mobility for a plurality of mobile nodes, the method comprising the steps of:
configuring at the home agent a plurality of addresses at which the home agent is reachable in a communications network,
assigning to each of the mobile nodes at least one of the plurality of home agent addresses, and
if a denial of service attack is detected by the home agent, de-configuring by the home agent the home agent address to which data packets of the denial of service attack are destined.

2. The method according to claim 1, further comprising the step of monitoring at the home agent the receiving rate of packets received at the home agent for each of the configured home agent addresses.

3. The method according to claim 2, further comprising the step of detecting at the home agent a denial of service attack based on the monitored receiving rates.

4. The method according to claim 2 or 3, further comprising the steps of identifying a home agent address for which the receiving rate of data packets destined to the home agent address is above a threshold level, and de-configuring the identified home agent address by the home agent.

5. The method according to claim 1 or 4, further comprising the step of advertising by the home agent a link layer address of the home agent for the de-configured home agent address, wherein the advertised link layer address is different from the home agent's link layer address.

6. The method according to one of claims 1 to 5, wherein the home agent address assigned to at least one mobile node is masked in the header of packets exchanged between the at least one mobile node and the home agent.

7. The method according to claim 6, wherein the home agent address is masked by including a pseudo home agent address being a network layer address transparent to higher protocol layers and to mobility-related security functions.

8. The method according to claim 6 or 7, wherein the pseudo home agent address is generated using keyed hash function.

9. The method according to claim 8, further comprising the step of configuring the home agent with the pseudo home agent address generated using the keyed hash function.

10. The method according to one of claims 1 to 9, wherein mobile node and home agent generate a pseudo home agent address or a home agent address using a keyed hash function based on a key used for securing the exchange of data packets between home agent and mobile node.

11. The method according to one of claims 1 to 10, further comprising the step of changing a pseudo home agent address or home agent address periodically in a session between mobile node and home agent.

12. The method according to one of claims 1 to 11, wherein plural mobile nodes are assigned the same home agent address.

13. The method according to claim 12, further comprising the step of assigning a new different home agent address to a respective mobile node of said plural mobile nodes upon de-configuring the home agent address assigned to said respective mobile node.

14. The method according to one of claims 1 to 13, further comprising the step of maintaining at the home agent a record of denial of service attacks, the record indicating a respective attacked home agent address and a list of mobile nodes that have been assigned the respective attacked home agent address.

15. The method according to claim 14, further comprising the step of detecting an attack on a mobile node based on the maintained record.

16. The method according to claim 15, further comprising the step of stopping the provision of mobility services for the attacked mobile node.

17. The method according to one of claims 1 to 11, wherein each mobile node can be uniquely identified by its assigned home agent address.

18. The method according to claim 17, further comprising the step of generating at the home agent a home agent address for a mobile node in response to receiving an anycast or multicast request sent by a mobile node for setting up a security association between the home agent and the requesting mobile node or for discovering a home agent address, and
responding to the anycast or multicast request using the generated home agent address.

19. The method according to claim 18, further comprising the step of configuring an interface of the home agent with the generated home agent address for the mobile node upon generation of the home agent address.

20. The method according to claim 17, further comprising the step of making a seed value of the home agent publicly available and generating a home agent address for a mobile node based on the seed value and a key used for securing the exchange of data packets between home agent and mobile node.

21. The method according to claim 20, wherein seed value is an address that is made public by binding the address to a domain name of the home agent in DNS.

22. The method according to claim 20 or 21, wherein the mobile node and the home agent both generate the same home agent address based on the seed value and the key.

23. The method according to one of claims 20 to 22, further comprising the step of configuring an interface of the home agent with the generated home agent address.

24. The method according to one of claims 1 to 23, wherein the plurality of addresses configured for the home agent have a network prefix different to the network prefix according to which the home addresses of the mobile nodes are configured.

25. The method according to one of claims 1 to 24, wherein the home agent addresses are network layer addresses and/or addresses according to the IPv6 protocol.

26. The method according to one of claims 1 to 25, wherein the home agent supports network layer mobility of the mobile nodes and/or the home agent and the mobile nodes implement Mobile IPv6.

27. A home agent for mitigating the effects of a denial of service attack, wherein the home agent supports mobility a plurality of mobile nodes, the home agent comprising:
a processing unit of configuring a plurality of addresses at which the home agent is reachable in a communications network, and for assigning to each of the mobile nodes at least one of the plurality of home agent addresses,
wherein the processing unit is further adapted to de-configure the home agent address to which data packets of the denial of service attack are destined, if a denial of service attack is detected by the home agent.

28. The home agent according to claim 26, further comprising means adapted to perform or to participate in the steps of the method according to one of claims 1 to 24.

29. A mobile node for use in a communication system supporting mobility, the mobile node comprising:
a processing unit for generating a pseudo home agent address or a home agent address of the home agent to be included in the header of packets to be exchanged between mobile node and home agent, and
a communication unit for exchanging packets with the home agent using the generated pseudo home agent address or the home agent address respectively.

30. The mobile node according to claim 28, wherein processing unit is adapted to generate the pseudo home agent address respectively the home agent address using a keyed hash function based on a key used for securing the exchange of data packets between home agent and mobile node.

31. The mobile node according to claim 28, wherein the communication unit is adapted to transmit an anycast or multicast request for setting up a security association between the home agent and the requesting mobile node or for discovering a home agent address to the home agent, and
to receive in response to the anycast or multicast request including a home agent address generated in response to the anycast or multicast request by the home agent.

32. The mobile node according to claim 28, wherein the communication unit is adapted to obtain a seed value of the home agent and the processing unit is adapted to generate a home agent address for a mobile node based on the seed value and a key used for securing the exchange of data packets between home agent and mobile node.

33. The mobile node according to claim 31, wherein the mobile node and the home agent both generate the same home agent address based on the seed value and the key.

34. The mobile node according to one of claims 28 to 30, further comprising a communication unit for obtaining at least one assigned home agent address of a home agent supporting mobility of the mobile node.

35. The mobile node according to one of claims 28 to 33, further comprising means adapted to perform or to participate in the method according to one of claims 1 to 24.

36. A communication system for supporting mobility of mobile nodes comprising a home agent according to claim 25 or 27 and/or a mobile node according to one of claims 28 to 34.

37. A computer-readable medium storing instructions that, when executed by a processor of a home agent, cause the home agent to mitigate the effects of a denial of service attack, wherein the home agent supports mobility a plurality of mobile nodes, by:
configuring a plurality of addresses at which the home agent is reachable in a communications network,
assigning to each of the mobile nodes at least one of the plurality of home agent addresses, and
de-configuring the home agent address to which data packets of the denial of service attack are destined, if a denial of service attack is detected by the home agent.

38. The computer-readable medium according to claim 36, further storing instructions that, when executed by the processor of the home agent, cause the home agent to perform or to participate in the steps of the method according to one of claims 1 to 24.

39. A computer-readable medium storing instructions that, when executed by a processor of a mobile node, cause the mobile node to:
generate a pseudo home agent address or a home agent address of the home agent to be included in the header of packets to be exchanged between mobile node and home agent, and
to exchange packets with the home agent using the generated pseudo home agent address or the home agent address respectively.

40. The computer-readable medium according to claim 38, further storing instructions that, when executed by the processor of the mobile node, cause the mobile node to perform or to participate in the steps of the method according to one of claims 1 to 24.
